# EUROPEAN PATENT APPLICATION

(11) **EP 1 853 011 A1**
(43) Date of publication of application: **07.11.2007**
(21) Application number: 06300425.3
(22) Date of filing: 02.05.2006
(51) Int. Cl.: H04L 12/56, H04L 12/46

(54) **Method for transmission of high speed uplink packet access data information in a cellular communications system**

(71) Applicant: Alcatel Lucent, 75008 Paris (FR)
(72) Inventor: Doetsch, Uwe, 71701 Schwieberdingen (DE); Zeller, Dietrich, 71067 Sindelfingen (DE)
(74) Representative: Brose, Gerhard

(57) **Abstract**

The invention relates to a method for transmission of high speed uplink packet access data information in a cellular communications system comprising a mobile network (N) in which a first network element (NE1) sends data through a network connection (3, 3') to a second network element (NE2) using IP transport, the method comprising determining information about the maximum transfer unit allowed for the IP transport type used, and limiting the size of high speed uplink packet access MAC-es packet data units to a value equal or slightly less than said IP transport maximum transfer unit.

## Description

The present invention relates to wireless communications systems, and more particularly, to a method for transmission of high speed uplink packet access data information in a cellular communications system.

The third generation (3G) evolution of Global Systems for Mobile communications (GSM) networks, commonly known as Universal Mobile Telecommunications Systems (UMTS), studies enhancements that can be applied to the radio access network in order to improve the performance on uplink dedicated transport channels. Uplink evolution technology is currently being standardized in the 3rd Generation Partnership Project (3GPP), which develops such UMTS standards 3GPP, under the "FDD Enhancement Uplink" work item. This enhanced uplink feature, or Enhanced Dedicated Channel (E-DCH), for UMTS is also generally known as High Speed Uplink Packet Access (HSUPA).

The current 3GPP specification, particularly chapters 6 and 7 of document TS 25.309 v6.6.0 (2006-03) "FDD Enhanced Uplink; Overall description; Stage 2", considered the closest state of the art, defines that HSUPA data is transmitted over the air between a mobile user equipment and a mobile base station in so called MAC-e packet data units (PDUs). A multiplexing entity inside the mobile user equipment is responsible for concatenating multiple MAC-d PDUs into MAC-es PDUs and to multiplex one or multiple MAC-es PDUs into a single MAC-e PDU, to be transmitted at the next transmission time interval (TTI). MAC-e PDUs received at the base station are then demultiplexed in MAC-es PDUs and said MAC-es PDUs sent to a corresponding SRNC (Serving Radio Network Controller). The maximum MAC-es PDU size is limited by the maximum transport block size available for a MAC-e PDU, which is 20.000 bits (the maximum MAC-es PDU size is then the maximum MAC-e PDU size, i.e. 20.000 bits, minus a few bits used for the MAC-e *header).*

The problem of such known configuration arises when MAC-es PDUs are sent from the base station to the SRNC using internet protocol (IP) transport. Since the size of these IP transport packets is limited, e.g. for IPv6 the recommended Maximum Transfer Unit (MTU) is 1.500 bytes (12.000 bits) and in IPv4 576 bytes (4.608 bits), to a value which is lower than the maximum MAC-es PDU size, when the base station receives a MAC-es PDU which is larger than said IP MTU it cannot transmit said MAC-es PDU to the SRNC.

Several known solutions deal with the problem stated above. One of them consists on increasing the value of the IP MTU to a value which is greater than the MAC-es PDU size, but this presents the disadvantage that it requires all subnetworks to support said maximum IP MTU which means a great amount of protocol changes in the netork. Another solution consists on reducing the maximum size of the MAC-e PDU transmitted over the air between the mobile user equipment and the mobile base station, but this presents the disadvantage of reducing the air interface transmission data rate of the cellular communications system.

It is the object of the present invention to provide an improved method for HSUPA data transmission in a cellular communications system.

This object is achieved by a method for transmission of high speed uplink packet access data information in a cellular communications system according to claim 1, a mobile user equipment according to claim 5, a mobile network according to claim 6 or 7 and a network element according to claim 8 or 9.

The basic idea of the invention is to provide HSUPA data transmission in which the maximum MAC-es PDU size is limited by the IP MTU used by the communications network.

Advantageous configurations of the invention emerge from the dependent claims, the following description and the drawings. For example, it is seen advantageous that the method according to the invention allows the transmission of HSUPA data from a mobile user equipment to a target SRNC without restricting the maximum air interface transmission data rate and without impacting the IP transport definition used by the communications network, that is, minimizing impact on mobile user equipment, network resources and air interface throughput.

In a first preferred embodiment of the invention, a mobile communications network provides the mobile user equipment with information about the maximum MAC-es PDU size value allowed, according to the corresponding IP transport type used by the communications network, and the mobile user equipment ensures that the number of MAC-d PDUs multiplexed in a single MAC-es PDU is such that the MAC-es PDU size does not exceed such network signaled size value.

In a second preferred embodiment of the invention the mobile user equipment sends MAC-es PDUs to a base station, which can be larger than the IP MTU used by the communications network, and the base station is responsible for splitting the received MAC-es PDUs which are larger than the used IP MTU in two or more data frames with a size less than said IP MTU. Said fragmented data frames are then reassembled at a target SRNC.

An embodiment example of the invention is now explained with the aid of Figures 1 to 3.

Fig. 1 illustrates a block diagram of a conventional wireless cellular communications system comprising a mobile network communicating with a plurality of mobile user equipments.

Fig. 2 shows a cellular communications system for transmission of high speed uplink packet access data information according to a first embodiment of the invention.

Fig. 3 shows a cellular communications system for transmission of high speed uplink packet access data information according to a second embodiment of the invention.

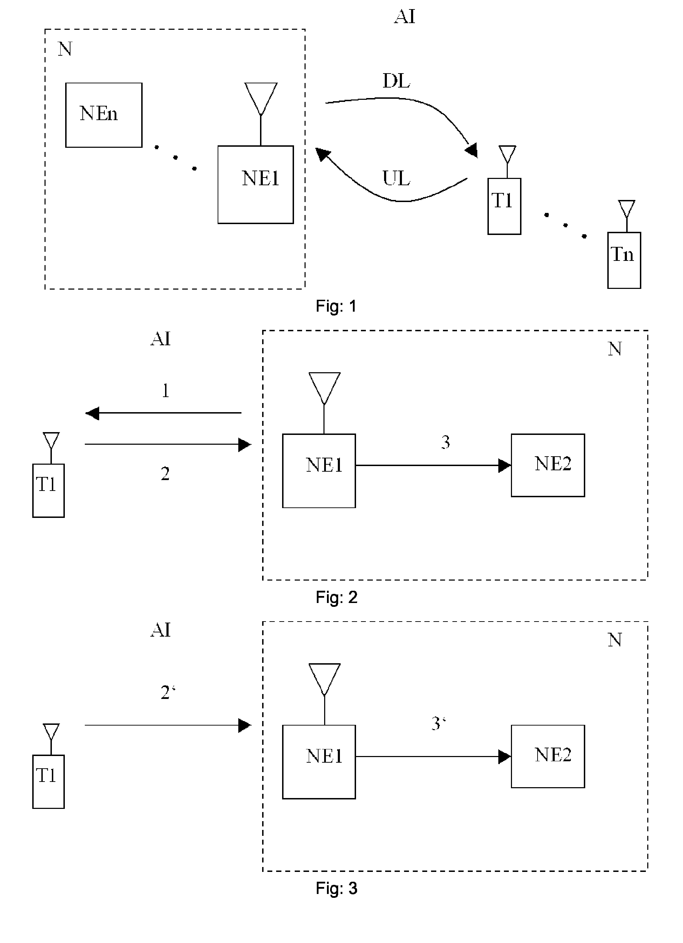

Figure 1 shows a block diagram of a wireless communications system comprising a mobile network N with a plurality of network elements NE1 to NEn, a radio air interface Al, downlink DL and uplink UL radio air interface connections, and a plurality of mobile user equipments or terminals T1 to Tn.

The mobile network N exchanges data information with the plurality of terminals T1 to Tn via the radio air interface downlink DL and an uplink connections UL. The network elements NE1 to NEn of the mobile network N can be for example base stations or Node Bs, radio network controllers RNCs or serving radio network controller SRNC, core network switches, or any other type of communication entities which are generally used for data network communications. The uplink connection UL may provide HSUPA capabilities for high speed uplink packet access.

Figure 2 shows a block diagram of a wireless communications system comprising a mobile network N with a least two network elements NE1 and NE2, a mobile network connection 3 between the at least two network elements NE1 and NE2, a radio air interface Al, a radio air interface downlink connection 1 and radio air interface uplink connection 2 and mobile user equipment T1.

The mobile network connection 3 between the at least two network elements NE1 and NE2 uses IP transport, eg. IPv6 or IPv4, for the data sent from the first network element NE1, e.g. a base station, to the target second network element NE2, e.g. a SRNC. It is understood that the mobile network may have more than just two interconnected network elements which use IP transport and that the data sent from the first network element NE1 may pass through one or more intermediate network elements before reaching the target second network element NE2.

The radio air interface uplink connection 2 between the mobile user equipment T1, e.g. a mobile phone, and the first network element NE1, e.g. a base station, uses high speed uplink packet access (HSUPA) protocol architecture, in which a multiplexing entity inside the mobile user equipment T1 is responsible for concatenating multiple MAC-d PDUs into MAC-es PDUs and to multiplex one or multiple MAC-es PDUs into a single MAC-e PDU, to be transmitted at each TTI.

According to the invention, the mobile network N determines information about the maximum transfer unit (MTU) allowed for the IP transport type used in the network or at least in the mobile network connection 3 between the two network elements NE1 and NE2 and provides the mobile user equipment T1, prior to the communication of HSUPA MAC-e PDUs, with an indication, on radio air interface downlink connection 1, about the maximum MAC-es PDU size allowed, according to said IP MTU determined. The mobile user equipment T1, after receiving such information, ensures that the number of MAC-d PDUs multiplexed in a single MAC-es PDU is such that the MAC-es PDU size does not exceed the maximum size provided by the network N.

As a example, if the mobile network N or at the mobile network connection 3 between the two network elements NE1 and NE2 uses IPv6 transport and a mobile user equipment T1 wishes to establish a HSUPA connection with the mobile network, the mobile network determines that the maximum transfer unit for IPv6 is 12.000 bits and sends an indication about a maximum MAC-es PDU size, according to said IP MTU determined, e.g. 12.000 bits minus the bits used for a MAC-e header, to that mobile user equipment.

Figure 3 shows a block diagram of a wireless communications system comprising a mobile network N with a least two network elements NE1 and NE2, a mobile network connection 3' between the at least two network elements NE1 and NE2, a radio air interface Al, a radio air interface uplink connection 2' and mobile user equipment T1.

The mobile network connection 3' between the at least two network elements NE1 and NE2 uses IP transport, e.g. IPv6 or IPv4, for the data sent from the first network element NE1, e.g. a base station, to the target second network element NE2, e.g. a SRNC. As for the example in Figure 2, it is understood that the mobile network may have more than just two interconnected network elements which use that IP transport and that the data sent from the first network element NE1 may pass through one or more intermediate network elements before reaching the target second network element NE2.

The radio air interface uplink connection 2' between the mobile user equipment T1, e.g. a mobile phone, and the first network element NE1, e.g. a base station, uses high speed uplink packet access (HSUPA) protocol architecture, in which a multiplexing entity inside the mobile user equipment T1 is responsible for concatenating multiple MAC-d PDUs into MAC-es PDUs and to multiplex one or multiple MAC-es PDUs into a single MAC-e PDU, to be transmitted at each TTI.

The mobile user equipment T1, in this example, multiplexes MAC-es PDU of any size less than the MAC-e transport block size (20.000 bits) according to the MAC-d flows configured for that mobile user equipment.

According to the invention, the mobile network N and particularly the first network element NE1, receives the MAC-e PDUs sent by the mobile user equipment T1, demultiplexes the MAC-es PDUs, determines information about the maximum transfer unit (MTU) allowed for the IP transport type used in the mobile network or at least in the mobile network connection 3' to the target second network element NE2, splits any received MAC-es PDU with a size greater than the determined IP MTU in two or more data frames with a size less than said IP MTU and sends the demultiplexed MAC-es PDUs with a size less than the determined IP MTU and the fragmented MAC-es PDUs to the target second network element NE2, e.g. a SRNC. In the SRNC, the fragmented MAC-es PDUs are reassembled and delivered to the SRNC reordering queue with the other MAC-es PDUs.

As a example, if the mobile network N or at the mobile network connection 3' between the two network elements NE1 and NE2 uses IPv4 transport and a mobile user equipment T1 sends a MAC-e PDU comprising one ore more MAC-es PDUs with a size greater than said IPv4 MTU, i.e. 4.608 bits, the base station demultiplexes said MAC-es PDUs and splits each MAC-es PDU in two or more data frames with a size less than 4.608 bits, then sends said fragmented MAC-es PDUs to the target SRNC where they will be reassembled. In case a MAC-e PDU received at the base station contains MAC-es PDUs with a size less than 4.608 bits, said MAC-es PDUs are transmitted without fragmentation to the SRNC.

For signaling MAC-es PDU fragmentation in mobile network connection 3' between the first network element NE1 and the second network element NE2 a E-DCH frame may contain an indication that that MAC-es PDU has been splitted and and indication about the position of said data frame fragment in the whole MAC-es structure, e.g. if a MAC-es PDU has been fragmented in two data frames, one of them will contan an indication that it is the "first" data frame of a fragmented MAC-es PDU and the other will contan an indication that it is the "second" data frame of a fragmented MAC-es PDU. With this information the target SRNC will be able to unambiguously recombine the data.

For the sake of generalization, it is understood that the means to carry out the method or certain steps of the method for transmission of high speed uplink packet access data information in a cellular communications system herein described can be implemented in hardware or software form in the mobile network and/or the mobile user equipment.

## Claims

1. Method for transmission of high speed uplink packet access data information in a cellular communications system comprising a mobile network (N) in which a first network element (NE1) sends data through a network connection (3, 3') to a second network element (NE2) using IP transport, the method **characterized by**
- determining information about the maximum transfer unit allowed for the IP transport type used, and
- limiting the size of high speed uplink packet access MAC-es packet data units to a value equal or slightly less than said IP transport maximum transfer unit.

2. The method for transmission of high speed uplink packet access data information in a cellular communications system according to claim 1 wherein the mobile network (N), prior to the communication of HSUPA MAC-e PDUs, sends an indication to a mobile user equipment (T1), on a radio air interface downlink connection (1), about the maximum MAC-es PDU size value, and the mobile user equipment (T1) multiplexing a number of MAC-d PDUs in a single MAC-es PDU in a way such that the MAC-es PDU size does not exceed the maximum size provided by the network.

3. The method for transmission of high speed uplink packet access data information in a cellular communications system according to claim 1 wherein the first mobile network element (NE1) receives HSUPA MAC-e PDUs from a mobile user equipment (T1), demultiplexes the MAC-es PDUs contained inside the MAC-e PDUs, splits any received MAC-es PDU with a size greater than the determined IP MTU in two or more data frames with a size less than said IP MTU and sends the MAC-es PDUs with a size less than the determined IP MTU and the fragmented MAC-es PDUs to the target second network element (NE2), which reassembles the fragmented MAC-es PDUs.

4. The method for transmission of high speed uplink packet access data information in a cellular communications system according to claim 3 wherein a E-DCH frame contains an indication that the MAC-es PDU has been fragmented and an indication about the position of said data frame fragment in the MAC-es PDU structure.

5. Mobile user equipment (T1) comprising means for multiplexing a plurality of MAC-d PDUs into MAC-es PDUs and multiplexing one or more MAC-es PDUs into a single MAC-e PDU, to be transmitted at each TTI, **characterized by** further comprising means for receiving an indication from a mobile network (N), on a radio air interface downlink connection (1), about a maximum MAC-es PDU size value, said value being equal or slightly less than an IP MTU used by the mobile network (N), and the mobile user equipment (T1) multiplexing a number of MAC-d PDUs in a single MAC-es PDU in a way that the MAC-es PDU size does not exceed the MAC-es PDU size value size provided by the network.

6. Mobile network (N) comprising means to determine information about the maximum transfer unit for an IP transport type used in the network or at least in a mobile network connection (3) between two network elements (NE1, NE2) and means for providing a mobile user equipment (T1), prior to the communication of HSUPA MAC-e PDUs, with an indication about a maximum MAC-es PDU size value equal or slightly less than that determined IP MTU.

7. Mobile network (N) comprising means for receiving high speed uplink packet access MAC-e PDUs from a mobile user equipment (T1), means for demultiplexing MAC-es PDUs contained inside the MAC-e PDUs, means for determining information about the maximum transfer unit for an IP transport type used in the network or at least in a mobile network connection (3') between two network elements (NE1, NE2), means for spliting any received MAC-es PDU with a size greater than the determined IP MTU in two or more data frames with a size equal or slightly less than said IP MTU and means for reassembling the fragmented MAC-es PDUs.

8. Network element (NE1), such as a base station, comprising means for demultiplexing one or more MAC-es PDUs contained in a MAC-e PDU received from a mobile user equipment (T1) and means for sending said demultiplexed MAC-es PDUs to a second network element (NE2), **characterized by** further comprising means to determine information about a maximum transfer unit for an IP transport type used in a mobile network connection (3') to the second network element (NE2), means to split any received MAC-es PDU with a size greater than the determined IP MTU in two or more data frames with a size equal or slightly less than said IP MTU and means for sending said fragmented MAC-es PDUs to the second network element (NE2).

9. Network element (NE2), such as an SRNC, comprising means for receiving one or more high speed uplink packet access MAC-es PDUs through a mobile network connection (3, 3') using IP transport **characterized by** further comprising means for receiving fragmented MAC-es PDUs which have a size equal or slightly less than the IP maximum transfer unit and means to reassemble said fragmented MAC-es PDUs.
